# EUROPEAN PATENT SPECIFICATION

(11) **EP 4 398 740 B1**
(45) Date of publication and mention of the grant of the patent: **26.11.2025**
(21) Application number: 22773229.4
(22) Date of filing: 06.09.2022
(51) Int. Cl.: A23L 27/23, A23J 3/22, A23L 27/26, A23L 27/00, A23L 29/00, A23L 33/185

(54) **MEAT ANALOGUE AND METHOD TO DECREASE THE OFF-FLAVOUR THEREOF**
FLEISCHANALOGON UND VERFAHREN ZUR VERRINGERUNG SEINES GESCHMACKS
ANALOGUE DE VIANDE ET MÉTHODE POUR DIMINUER SA SAVEUR DÉSAGRÉABLE

(30) Priority: 10.09.2021 EP 21196166
(43) Date of publication of application: 17.07.2024
(73) Proprietor: Unilever IP Holdings B.V., 6708 WH Wageningen (NL)
(72) Inventor: DRAIJER, Richard, 6708 WH Wageningen (NL)
(74) Representative: Plaggenborg, Menko Bernard
(86) International application number: PCT/EP2022/074682
(87) International publication number: WO 2023/036756

(56) References cited:
- WO-A2-2020/097363
- KR-B1- 102 070 385
- US-A- 4 156 021
- US-A1- 2015 305 390
- US-A1- 2016 324 167

## Description

### Field of the invention

The present invention relates to meat analogues having a decreased off-flavour, a process for producing the same and a method to reduce off-flavour of meat analogues.

It is commonly accepted that current meat production, in particular beef, is not sustainable.

However, meat consumption is still increasing and for many people meat is an important source of dietary protein. Meat analogues offer a more sustainable dietary protein alternative. Meat analogues are food products often made to resemble their real meat counterparts but prepared from non-animal protein such as soy and pea protein. There has been a rapid growth of sales of meat analogues and in companies offering these. However, many consumers still prefer the real meat products. While they agree that meat analogues are more sustainable, they don't like the flavour of meat analogues. Indeed, meat analogues tend to have a distinct off-flavour.

WO09065724 A1 suggests decreasing legume off-flavour by enzymatic fermentation. This is a costly process. EP 0328 322 discloses the use of catalase. WO10124976 discloses the treatment of soybeans-based products with a peroxidase preferably a Marasmius scorodonius peroxidase or a functional equivalent thereof. WO05070223 discloses the use oxidoreductase enzyme in soy-based beverages and products. Such enzymatic processes are usually expensive and complex to control and difficult to integrate in standard production lines. WO15153666 discloses adding one or more lactones and/or carotenoids to the food product to mask off-flavours, or washing wheat gluten. WO19228957A1 discloses the use of ethyl cyclohexanoate to block off-notes. US2015305390 discloses a method of minimizing undesirable odours or flavours in a composition comprising plant proteins by contacting the composition with a ligand having affinity for one or more lipoxygenases; or contacting the composition with activated carbon, and then removing the activated carbon from the composition; or adding a lipoxygenase inhibitor and/or an antioxidant to the composition. These methods require expensive food additives whereas consumers increasingly avoid food products with long ingredient lists. Thus, there is a need for a simple, inexpensive way to decrease the off-flavours in meat analogues which is consumer product label friendly. It should be flexible and easy to implement in existing formulations and standard production processes without requiring additional process steps like enzymatic catalysed reactions.

### Summary of the invention

Surprisingly, applicants have found the meat analogue and process according to the invention which provides a simple and inexpensive way to decrease the off-flavour in meat analogues. It can be readily applied using existing production facilities. It is relatively straightforward to adapt existing product recipes. Without wishing to be bound by theory it is hypothesized that the decrease in off-flavour allows the meaty flavour to be better noticed resulting in meat analogue with an improved flavour.

The invention provides a meat analogue comprising non-animal protein, flavouring agent, lipid, dietary fiber, water whereby said meat analogue has a ratio (w/w) of K+ to Na+ of at least 1.3, more preferably at least 1.8, more preferably at least 2 preferably at least 2.2, more preferably at least 2.4. and preferably whereby *food grade acid* is present in an amount of at least 0.03 wt%, even more preferably at least 0.05 wt% by weight of the meat analogue, preferably said food grade acid is present in an amount of from 0.03 to 8 wt%, more preferably from 0.05 to 5 wt%, even more preferably from 0.05 to 4 wt% of food grade acids by weight of the meat analogue; and preferably whereby the food grade acid comprises citric acid, preferably in an amount of at least 0.01 wt%, more preferably of at least 0.03 wt%, more preferably at least 0.05 wt%, preferably at most 3 wt%, more preferably at most 2 wt%, more preferably at most 1 wt%, preferably in an amount of from 0.01 to 3 wt%, more preferably 0.03 to 2 wt%, most preferably 0.05 to 1 wt% of citric acid by weight of the meat analogue.

The invention provides a meat analogue comprising soy protein and/or pea protein, lipid, flavoring agents, water, food grade acid, K+ and Na+ whereby the ratio (w/w) of K+ to Na+ is at least 1.3, and preferably whereby the food grade acid comprises citric acid, preferably in an amount of at least 0.01 wt%, more preferably of at least 0.03 wt%, more preferably at least 0.05 wt%, preferably at most 3 wt%, more preferably at most 2 wt%, more preferably at most 1 wt%, preferably in an amount of from 0.01 to 3 wt%, more preferably 0.03 to 2 wt%, most preferably 0.05 to 1 wt% of citric acid by weight of the meat analogue.

The invention provides a meat analogue comprising non-animal protein lipid, flavouring agents, dietary fiber, water and a ratio of K+ to Na+ of from 1.3 to 20, more preferably of from 1.8 to 20, even more preferably of from 2 to 20, even more preferably of from 2.2. to 20. and at least 0.1 wt% food grade acid by weight of the meat analogue
a. wherein the food grade acid comprises at least citric acid, acetic acid and at least 3 other food grade acids selected from formic acid, lactic acid, malic acid, succinic acid and combinations thereof
b. wherein the Na+ is present in amount of at most 470 mg and, more preferably at most 330mg, most preferably from 50 mg to 330mg Na+ per 100g of meat analogue
c. 0.001 to 0.3 wt%, preferably 0.005 to 0.2 wt% of glutamate
d. 0.0005 to 2 wt%, preferably 0.001 to 0.5 wt% of IMP
e. 0.0005 to 2 wt%, preferably 0.001 to 0.5 wt% of GMP
f. 0.05 to 2 wt% of sugar, preferably selected from sucrose, fructose, glucose, maltose and combinations thereof.

Whereby the pH is from 4.7 to 6.6, more preferably from 5.1 to 5.9 and preferably said non-animal comprises a protein concentrate and/or protein isolate which contributes at least 20 mg of K+, more preferably at least 40 mg of K+, most preferably at least 60 mg of K+ per 100g of meat analogue;
Preferably whereby the meat analogue is substantially free of ingredients derived from animals.

The invention provides a meat analogue comprising non-animal protein lipid, flavouring agents, dietary fiber, water and a ratio of K+ to Na+ of from 1.3 to 20, more preferably of from 1.8 to 20, even more preferably of from 2 to 20, even more preferably of from 2.2. to 20. and at least 0.1 wt% food grade acid by weight of the meat analogue
a. wherein the food grade acid comprises at least citric acid, acetic acid and at least 3 other food grade acids selected from formic acid, lactic acid, malic acid, succinic acid and combinations thereof
b. wherein the Na+ is present in amount of at most 470 mg and, more preferably at most 330mg, most preferably from 50 mg to 330mg Na+ per 100g of meat analogue
c. 0.001 to 0.3 wt%, preferably 0.005 to 0.2 wt% of glutamate
d. 0.0005 to 2 wt%, preferably 0.001 to 0.5 wt% of IMP
e. 0.0005 to 2 wt%, preferably 0.001 to 0.5 wt% of GMP
f. 0.05 to 2 wt% of sugar, preferably selected from sucrose, fructose, glucose, maltose and combinations thereof.

Whereby the pH is from 4.7 to 6.6, more preferably from 5.1 to 5.9
at least part of said glutamate, IMP and GMP is added as a high ribonucleotide flavouring agent, preferably said high ribonucleotide flavouring agent having at least 10 mg/g dry weight of IMP and or at least 10 mg/g dry weight of IMP expressed per g dry weight of flavouring agent, and
preferably said non-animal comprises a protein concentrate and/or protein isolate which contributes at least 20 mg of K+, more preferably at least 40 mg of K+, most preferably at least 60 mg of K+ per 100g of meat analogue;
Whereby the meat analogue is substantially free of ingredients derived from animals.

The invention provides a meat analogue comprising soy protein, pea protein and combinations thereof, lipid, flavouring agents, dietary fiber, water and a ratio of K+ to Na+ of at least 2 preferably at least 2.2, more preferably at least 2.4. and at least 0.1 wt% food grade acid by weight of the meat analogue
a. wherein the food grade acid comprises at least citric acid, acetic acid and at least 3 other food grade acids selected from formic acid, lactic acid, malic acid, succinic acid and combinations thereof
b. wherein the Na+ is present in amount of at most 260 mg and, more preferably at most 190mg, most preferably from 100 mg to 190 Na+ per 100g of meat analogue
c. 0.001 to 0.3 wt%, preferably 0.005 to 0.2 wt% of glutamate
d. 0.0005 to 2 wt%, preferably 0.001 to 0.5 wt% of IMP
e. 0.0005 to 2 wt%, preferably 0.001 to 0.5 wt% of GMP
f. 0.05 to 2 wt% of sugar, preferably selected from sucrose, fructose, glucose, maltose and combinations thereof.

Whereby the pH is from 5.1 to 5.9 and said soy and/or pea protein comprises a protein concentrate and/or protein isolate which contributes at least 20 mg of K+, more preferably at least 40 mg of K+, most preferably at least 60 mg of K+ per 100g of meat analogue;
Whereby the meat analogue is substantially free of ingredients derived from animals.

The invention provides a method to decrease the off-flavour of a meat analogue comprising the step of providing a meat analogue comprising non-animal protein, flavouring agent, lipid, dietary fiber, water whereby said meat analogue has a ratio (w/w) of K+ to Na+ of at least 1.3, more preferably at least 1.8, more preferably at least 2 preferably at least 2.2, more preferably at least 2.4. and preferably whereby food grade acid is present in an amount of at least 0.03 wt%, even more preferably at least 0.05 wt% by weight of the meat analogue, preferably said food grade acid is present in an amount of from 0.03 to 8 wt%, more preferably from 0.05 to 5 wt%, even more preferably from 0.05 to 4 wt% of food grade acids by weight of the meat analogue.

### Detailed description of the invention

### Definitions

The term "animal protein" as used herein refers to protein from animals like mammals, fish and fowl including chicken, cows, pigs, sheep, goat, fish etc. It includes milk protein, egg protein.

The term "meat analogue" as used herein refers to a food product resembling a real-meat product whereby the protein is of non-animal origin.

The term "vegan meat analogue" as used herein refers a meat analogue substantially free of protein of animal origin including but not limited to dairy protein, egg white. Preferably, a vegan meat analogue is substantially free of animal protein and animal fat. Even more preferably a meat analogue comprises less than 0.1 wt% of ingredients derived from animals, more preferably less than 0.01 wt%, even more preferably a meat analogue is substantially free from ingredients derived from animals. Preferably the meat analogue according to the invention is substantially free of heme-containing protein, preferably substantially free of isolated and purified leg heme-containing protein. The term "substantially free" as used herein is understood to mean that such ingredients are not added as such for a specific functionality but can be present in trace amounts as part of a non-animal derived ingredient. Preferably the meat analogue according to the invention contains less than 0.01 wt%, more preferably less than 0.001 wt%, even more preferably less than 0.0001 wt% of heme-containing protein, preferably less than 0.01 wt%, more preferably less than 0.001 wt%, even more preferably less than 0.0001 wt% of isolated and purified leg heme-containing protein. As used herein. the term "isolated and purified" indicates that the preparation of heme-containing protein is at least 60% pure, preferably at least 80% pure, most preferably at least 90% pure.

The term "minced meat analogue" as used herein refers to a vegetarian product that has an appearance and structure similar to that of minced meat. Preferably, like minced meat, the term "minced meat analogue" refers to a meat analogue which is largely (≥ 20 wt.%) composed of irregular chunks of hydrated texturized protein. The term "minced meat analogue" also encompasses products shaped from such minced meat analogue, such as patties, sausages and meat balls.

The term "non-animal" as used herein refers to a plant, algae, fungus, or microbe.

The terms "a" and "an" and "the" and similar referents as used herein refer to both the singular and the plural, unless otherwise indicated herein or clearly contradicted by context. The term "texturized protein" or TP as used herein refers to fibrous and spongy chunks, which are produced by cooking the starting materials in an extruder cooker and extruding them to form a texturized protein. These are often available as dry TP chunks. While meat analogues are often prepared from TP it is clear to a skilled person that TP is not a meat analogue.

The term "texturized vegetable protein" or "TVP" as used herein refers to TP based on plant protein such as soy protein, pea protein, sunflower protein, mung bean protein.

The term "protein concentrate" as used herein refers to material having at least 60 wt% protein based on dry matter. Soy protein concentrates are usually prepared by removing soluble carbohydrate fraction as well as some flavour compounds from defatted soy meal. TVP is often made from protein concentrates.

The term "protein isolate" as used herein refers to particulate material having at least 90 wt% of protein based on dry matter. Examples include soy protein isolate, pea protein isolate and potato protein isolate. Unlike texturized protein, protein isolates are typically in the form a fine powdered material.

The term" spun protein fibers" refers to protein fibers obtained by passing an alkaline protein-containing solution through spinnerets into an acid coagulation bath to form the fibres. Spun protein fibers were developed in 1940's and have been superseded by cheaper and better quality protein products mainly TVP obtained by thermoplastic extrusion. The equipment employed to perform this spinning process is extremely sophisticated for the food industry and represents a very high initial cost problem. Adding further to the economic infeasibility of the product produced by the wet spinning process is the expensive starting materials which must be employed. Moreover, product uniformity is difficult to achieve due to the general complexity of the process and the numerous parameter control problems presented. Moreover, resulting products had limited applicability and were sold in cans and frozen.

The term "dietary fiber" as used herein refers to indigestible carbohydrates and includes both plant fiber as defined above and fiber which has not been isolated from plants as such.

The term "sugar" as used herein refers to all monosaccharides and disaccharides but excludes polyols as defined in EU Regulation 1169/2011 Annex I.

Sodium and potassium can be determined with any appropriate method known in the art, preferably by ICP-OES based on NEN-EN 15510 such as offered by commercial laboratories like SGS Nederland B.V.

### The meat analogue

The meat analogue according to the invention is a food product which can be consumed after heating by the consumer usually after cooking in a pan, microwave, on a grill or barbeque. The meat analogue according to the invention may have any format including but not limited to burgers, sausages, meat balls, schnitzels, nuggets, chicken analogue pieces, shawarma, minced meat, chicken breast, spareribs. The meat analogue may be breaded like a schnitzel or nugget. The meat analogue according to the invention is preferably a minced meat analogue, even more preferably a vegan minced meat analogue like a sausage, burger, or meat ball. The meat analogue according to the invention is preferably a vegan meat analogue. Preferably, the meat analogue according to the invention comprises non-animal protein, flavouring agent, lipid, dietary fiber, water and optionally colouring agent.

### Non-animal protein

The meat analogue according to the invention comprises non-animal protein such as from plant, algae, fungus, or microbe. Any suitable plant protein may be used. Preferably the non-animal protein comprises plant protein like wheat protein, legume protein and combinations thereof. Legume protein preferably comprises soy, pea and combinations thereof. The non-animal protein may be a texturized protein or a protein isolate. Preferably the non-animal protein comprises texturized protein from plant, algae, fungus, or microbe. Preferably the non-animal texturized protein comprises texturized vegetable protein (TVP), even more preferably TVP from wheat protein, legume protein like soy, pea protein and combinations thereof.

Preferably, the meat analogue according to the invention comprises at least 10 wt%, more preferably at least 12 wt%, even more preferably at least 14 wt%, preferably at most 30 wt% more preferably at most 25 wt%, preferably of from 10 to 30 wt%, more preferably of from 12 to 25 wt%, most preferably of from 14 to 25 wt% of plant protein.

Preferably, the meat analogue according to the invention comprises at least 10 wt%, more preferably at least 12 wt%, even more preferably at least 14 wt%, and preferably at most 30 wt% more preferably at most 25 wt%, preferably of from 10 to 30 wt%, more preferably of from 12 to 25 wt%, most preferably of from 14 to 25 wt% of legume protein.

Preferably, the meat analogue according to the invention comprises at least 10 wt%, more preferably at least 12 wt%, even more preferably at least 14wt% preferably at most 30 wt% more preferably at most 25 wt%, preferably of from 10 to 30 wt%, more preferably of from 12 to 25 wt%, most preferably of from 14 to 25 wt% of soy protein and/or pea protein. The meat analogue according to the invention preferably comprises less than 1 wt% of spun protein fibers, like described in US 2730447 and GB 2004726 A. The meat analogue according to the invention is preferably substantially free of spun protein fibers.

### Water

Preferably, the meat analogue according to the invention comprises at least 40 wt%, more preferably at least 45 wt%, even more preferably at least 50 wt% preferably at most 85 wt% preferably at most 75 wt% more preferably at most 60 wt%, preferably of from 40 to 85 wt%, more preferably of from 45 to 75 wt%, most preferably of from 50 to 60 wt% of water.

### Potassium ions and Sodium-ions

Surprisingly, it was found that off-flavour of meat analogues could be decreased by providing a meat analogue according to the invention. The meat analogue according to the invention preferably comprises potassium ions (K+) and sodium ions (Na+) in a specific ratio (w/w). The meat analogue according to the invention preferably has a w/w ratio of K+ to Na+ of at least 1.3, more preferably at least 1.8, more preferably at least 2, preferably at least 2.2, more preferably at least 2.4, preferably at most 20, more preferably at most 10. Preferably, the meat analogue according to the invention has a ratio (w/w) of K+ to Na+ of from 1.3 to 20, more preferably of from 1.8 to 20, even more preferably of from 2 to 20, even more preferably of from 2.2. to 20, more preferably of from 1.8 to 10, even more preferably of from 2 to 10, even more preferably of from 2.2 to 10.

The effect on off-flavour was even stronger in meat analogues have relatively low amounts of Na+ such as at most 600 mg/100g of meat analogue or even lower. Preferably, the meat analogue according to invention comprises Na+ ions in amount of at most 600 mg, more preferably at most 470 mg, even more preferably at most 330 mg, even more preferably at most 260 mg, even more preferably at most 190 mg, preferably at least 10 mg, more preferably at least 50 mg, even more preferably at least 100 mg Na+ per 100g of meat analogue. Preferably, the meat analogue according to invention comprises Na+ ions in amount of from 10 to 600 mg/100g of meat analogue, more preferably of from 50 to 470 mg, even more preferably of from 50 to 330 mg, even more preferably of from 50 to 260 mg, even more preferably of from 50 to 190, most preferably of from 100 to 190 mg/100g of meat analogue. It was noted that the amount of NaCl added was only a part of the amount of Na+ measured as many other ingredients contribute to the amount of Na+ measured.

The amount of potassium follows from the K+/Na+ ratio and the amount of Na+. Preferably, the meat analogue according to invention comprises K+ in amount of at most 3000 mg, more preferably at most 2000 mg, even more preferably at most 1500 mg/100g of meat analogue and preferably at least 200 mg, more preferably at least 500 mg more preferably at least 600 mg more preferably at least 700 mg, preferably of from 200 and 3000 mg, more preferably of from 600 and 2000 mg, even more preferably of from 700 and 1500 mg/100g of meat analogue. Similar to N+, it was noted that if KCI was used it was only contributing to part of the K+ present in the meat analogue.

Preferably, the meat analogue has the recited K+/Na+ ratio whereby the at least part of the K+ and Na+ is derived from ingredients other than NaCl and KCI. Preferably, the meat analogue has the recited K+/Na+ ratio whereby the at least part of the K+ and Na+ is derived from ingredients other than NaCl and KCI and the meat analogue has no KCI added as such (a declarable ingredient in the EU).

Surprisingly, it was found that that the high levels of K+ could be obtained by using other functional ingredients such as source of K+ such as non-animal protein, flavouring, food grade acid and combinations thereof. This provides the advantage of limiting the number of ingredients used and the associated complexity in supply chain. It also provides the opportunity to offer meat analogues with a so-called clean label with a minimum of ingredients. Preferably, the non-animal protein comprises a protein concentrate and/or protein isolate. Preferably the K+/Na+ ratio is obtained by using a protein concentrate and/or protein isolate having at least 10 mg of K+/100g (dry weight) of protein concentrate and/or protein isolate. Preferably the K+/Na+ ratio is obtained by using a protein concentrate having at least 100 mg of K+, preferably at least 500mg K+, more preferably at least 1000mg K+, preferably from 100 to 10000 mg K+, more preferably from 500 to 10000 mg, most preferably from 1000 to 10000 K+per100g (dry weight) of protein concentrate. Preferably the K+/Na+ ratio is obtained by using a protein isolate having at least 100 mg of K+, preferably at least 500mg K+, more preferably at least 1000mg K+, preferably from 100 to 10000 mg K+, more preferably from 500 to 10000 mg, most preferably from 1000 to 10000 K+per100g (dry weight) of protein isolate. Preferably, the K+/Na+ ratio is obtained by using a protein concentrate having at most 10000 mg of Na+, preferably at most 7000 mg Na+, more preferably at most 5000 mg Na+, preferably from 1 to 10000 mg Na+, more preferably from 5 to 7000 mg, most preferably from 10 to 5000 Na+per100g (dry weight) of protein concentrate. Preferably the K+/Na+ ratio is obtained by using a protein isolate having most 10000 mg of Na+, preferably at most 7000 mg Na+, more preferably at most 5000 mg Na+, preferably from 1 to 10000 mg Na+, more preferably from 5 to 7000 mg, most preferably from 10 to 5000 Na+per100g (dry weight) of protein isolate.

Preferably the K+/Na+ ratio is obtained by using an amount of protein concentrate and/or protein isolate contributing at least 20 mg of K+, more preferably at least 40 mg, most preferably at least 60 mg of K+ per 100g of meat analogue.

Preferably the K+/Na+ ratio is obtained by using a potassium salt of a food grade acid as further described below. Preferably the K+/Na+ ratio is obtained by using potassium acetate, potassium lactate. These may be added as part of a flavouring agent such as fermented preparation.

### Flavouring agents

The meat analogue according to the invention preferably comprises flavouring agents, preferably in an amount to obtain the desired flavour which is preferably a meat flavour. Preferred flavouring agents which may contribute to meat flavour include but are not limited to glutamate, inosine monophosphate, guanosine monophosphate, food grade acids, meat flavouring agent, a beef flavouring agent, a chicken flavouring agent, a pork flavouring agent, a fish flavouring agent, yeast extract, fermented plant preparations, such as fermented onion preparations, herbs, spices and combinations thereof. Meat flavouring agent provide a more general meat flavour while specific meat flavouring agents like beef flavouring agent, chicken flavouring agent, pork flavouring agent, a fish flavouring agent provide more specific meat flavour of the respective animals.The meat analogue according to the invention preferably comprises glutamate, preferably in an amount of 0.001 to 0.4 wt%, more preferably 0.005 to 0.2 wt%, even more preferably 0.01 to 0.1 wt% of glutamate by weight of the meat analogue. The meat analogue according to the invention preferably comprises inosine monophosphate (IMP), preferably in an amount of 0.0001 to 0.3 wt%, more preferably 0.0005 to 0.2 wt%, even more preferably 0.001 to 0.1 wt% of IMP by weight of the meat analogue.

The meat analogue according to the invention preferably comprises guanosine monophosphate (GMP), preferably in an amount of 0.0001 to 0.3 wt%, more preferably 0.0005 to 0.2 wt%, even more preferably 0.001 to 0.1 wt% of GMP by weight of the meat analogue. Preferably, the meat analogue according to the invention comprises glutamate and GMP, most preferably glutamate, IMP and GMP in the levels mentioned above to contribute to a meat flavour.

The meat analogue according to the invention preferably comprises sugar, preferably in an amount of 0.01 to 4 wt%, more preferably 0.05 to 3 wt%, even more preferably 0.1 to 2 wt% of sugar by weight of the meat analogue. Any sugar fit for human consumption may be used. The sugar comprises sucrose, fructose, glucose, maltose, and combinations thereof

The meat analogue according to the invention preferably comprises sucrose, preferably in an amount of 0.0001 to 5 wt%, more preferably 0.0005 to 2 wt%, even more preferably 0.001 to 1 wt% of sucrose by weight of the meat analogue.

Flavouring agents such as glutamate, IMP, GMP, and sugar may be added as such or as part of another ingredient. For example, often specific flavour compositions from flavour houses may be used e.g., chicken flavour, pork flavour, beef flavour etc. These may be complex mixtures with many ingredients. Standard yeast extract does not contain IMP and GMP. Specific yeast extracts may be used as a source of glutamate, IMP and/or GMP. If the meat analogue comprises glutamate, IMP and GMP, preferably at least part thereof is added as a high ribonucleotide flavouring agent such as a chicken flavour, fermented preparation. A high ribonucleotide flavouring agent for this purpose refers to a food ingredient having at sufficiently high amounts of IMP and/or GMP such that the above mentioned levels of IMP and/or GMP can be obtained by the usual levels of said flavouring agent. Preferably a high ribonucleotide flavouring agent has least 10mg of IMP and/or GMP, preferably at least 20 mg, more preferably at least 30 mg, preferably of from 10 to 200 mg, more preferably of from 20 to 100mg most preferably of from 30 to 70mg IMP and/or GMP per g flavouring agent (dry weight). For example, yeast extract with at least 30mg/g IMP and 30 mg/g GMP is available from Biospringer (YE HN). The meat analogue according to the invention comprises an amount of a high ribonucleotide flavouring agent like a high ribonucleotide yeast extract sufficient to obtain the amounts of glutamate, IMP and GMP as indicated above. For the avoidance of doubt the amounts of glutamate, IMP, GMP, sugar, sucrose, mentioned above refer to the amounts present in the meat analogue regardless of whether these have been added as such or as part of another ingredient like a flavouring agent.

Preferably, at least part of the Na+ is derived from a flavouring agent such as a meat flavouring agent, a beef flavouring agent, a chicken flavouring agent, a pork flavouring agent, a fish flavouring agent, yeast extract, fermented plant preparations, such as fermented onion preparation. Preferably, at least part of the Na+ is derived from a flavouring agent said flavouring agent comprising at least 10 mg Na+/g of flavouring agent. Preferably, at least part of the Na+ is derived from a flavouring agent. Preferably, at least part of the Na+ is derived from a flavouring agent said flavouring agent comprising at least 10 mg Na+/g of flavouring agent.

### Food grade acids

The meat analogue according to the invention preferably comprises food grade acids. These may be added as such but often will be added part of a flavouring agent. The amounts of food grade acids mentioned herein refer to the amounts present in the meat analogue regardless of whether they were added as such or as part of another ingredient like a flavouring agent. For example, some fermented preparations such as fermented onion preparation may be high in potassium or sodium acetate. The meat analogue according to the invention preferably comprises food grade acids, preferably in an amount of from 0.03 to 8 wt%, more preferably from 0.05 to 5 wt%, even more preferably from 0.05 to 4 wt%, even more preferably from 0.1 to 4 wt% of food grade acids by weight of the meat analogue. The meat analogue according to the invention preferably comprises food grade acids, preferably in an amount of at least 0.03 wt%, preferably at least 0.05 wt%, even more preferably at least 0.1 wt%, by weight of the meat analogue. The term "food grade acids" as used herein refers to organic acids which may be used in foods and are safe for human consumption. Food grade acids comprise at least one of citric acid, acetic acid, formic acid, lactic acid, malic acid, succinic acid, oxalic acid, tartaric acid and combinations thereof. Preferably, the meat analogue comprises food grade acids selected from citric acid, acetic acid, formic acid, lactic acid, malic acid, succinic acid and combinations thereof. Preferably, the meat analogue comprises the combination of citric acid and at least 2, more preferably at least 3, even more preferably at least 4 other food grade acids selected from acetic acid, formic acid, lactic acid, malic acid and succinic acid. Preferably, the meat analogue comprises the combination of citric acid, acetic acid and at least 3 other food grade acids selected from formic acid, lactic acid, malic acid and succinic acid. Preferably, the meat analogue comprises the combination of citric acid, acetic acid, formic acid, lactic acid, malic acid and succinic acid.

The food grade acid preferably comprises citric acid. The meat analogue according to the invention preferably comprises citric acid, preferably in an amount of from 0.01 to 3 wt%, more preferably 0.03 to 2 wt%, most preferably 0.05 to 1 wt% of citric acid by weight of the meat analogue. The meat analogue according to the invention preferably comprises at least 0.01 wt%, preferably at least 0.03 wt%, more preferably at least 0.05 wt%, preferably at most 3 wt%, more preferably at most 2 wt%, more preferably at most 1 wt% of citric acid by weight of the meat analogue.

The meat analogue according to the invention preferably comprises acetic acid, preferably in an amount of 0.01 to 3 wt%, more preferably 0.03 to 2 wt%, even more preferably 0.05 to 1 wt% of acetic acid by weight of the meat analogue. The meat analogue according to the invention preferably comprises at least 0.01 wt%, preferably at least 0.03 wt%, more preferably at least 0.05 wt%, preferably at most 3 wt%, more preferably at most 2 wt%, more preferably at most 1 wt% of acetic acid by weight of the meat analogue.

The meat analogue according to the invention preferably comprises lactic acid, preferably in an amount of 0.01 to 8 wt%, more preferably 0.03 to 5 wt%, even more preferably 0.05 to 3 wt% of lactic acid by weight of the meat analogue. The meat analogue according to the invention preferably comprises at least 0.01 wt%, preferably at least 0.03 wt%, even more preferably at least 0.05 wt% preferably at most 8 wt%, more preferably at most 5 wt%, more preferably at most 3 wt% of lactic acid by weight of the meat analogue.

Fatty acids, glutamate and other amino acids are not considered to be a food grade acid for the present purpose. The references to an acid and the conjugate base are used interchangeably. For example, citric acid and citrate. The amount of food grade acid can be determined by any appropriate known method. Preferably the amount of food grade acids is determined using quantitative NMR (Quantitative NMR studies of multiple compound mixtures, X Li, K Hu - Annual reports on NMR spectroscopy 90, 2017, 85-143). Preferably with a with a Bruker AVANCE III spectrometer operating at 600 MHz. More details are described in the Examples.

For the present purpose the amount of food grade acid encompasses the measured amount of both the acid and its conjugate base. For polyprotic acids, all acid and base forms are included. For example, in the case of citric acid, this includes all of the citric acid, mono-protonated, di-protonated, and deprotonated citrate. Food grade acids may be added as such or in salt form as part of another ingredient.

Preferably, the meat analogue has a pH of 4.7 to 6.6, more preferably from 5.1-5.9, even more preferably 5.2 to 5.6.

### Binding agent

The meat analogue according to the invention preferably comprises binding agent, preferably in an amount of 0.1 to 20 wt%, more preferably 7 to 25 wt%, even more preferably 8 to 23 wt% of non-animal protein by weight of the meat analogue.

### Lipid

The meat analogue according to the invention preferably comprises lipid. Preferably The term "lipid" as used herein refers to a glyceride component that contains at least 80 wt.% of glycerides selected from triglycerides, diglycerides and combinations thereof. Any food grade lipid may be used. Lipid may be a liquid oil or a solid fat or preferably both. Preferably the lipid comprises both liquid oil droplets and solid fat particles.

The term "liquid oil" as used herein refers to an oil that contains no solid at 20°C (N20 = 0%). The solid fat content at 20°C can be determined using ISO method ISO 8292-2:2008.

The term "solid fat" as used herein refers to a fat that contains at least 20% solid fat at 20°C (N20 ≥20%).

Preferably, meat analogue according to the invention comprises 1 to 25 wt% of lipid, more preferably 5 to 22 wt%, even more preferably 8 to 20 wt% by weight of the total composition. Preferably, meat analogue according to the invention comprises 1 to 20 wt% of liquid oil, more preferably 2 to 15 wt%, even more preferably 3 to 10 wt% by weight of the total composition.

Preferably, meat analogue according to the invention comprises 1 to 20 wt% of solid fat, more preferably 2 to 15 wt%, even more preferably 3 to 10 wt% by weight of the total composition.

Preferably, meat analogue according to the invention comprises 1 to 25 wt% of lipid, more preferably 5 to 22 wt%, even more preferably 8 to 20 wt% by weight of the total composition, whereby the meat analogue comprises both liquid oil droplet and solid fat particles, preferably whereby the meat analogue comprises
- 1 to 20 wt% of liquid oil, more preferably 2 to 15 wt%, even more preferably 3 to 10 wt% in the form of liquid oil droplets, and
- 1 to 20 wt% of solid fat, more preferably 2 to 15 wt%, even more preferably 3 to 10 wt% in the form of solid fat particles,

Any food grade lipid may be used. Preferred liquid oils include one or more of vegetable oil, an algal oil, sunflower oil, corn oil. soybean oil, palm fruit oil, palm kernel oil, safflower oil, flaxseed oil, rice bran oil, cottonseed oil, olive oil, canola oil, coconut oil, and mango oil. Preferred solid fat particles include, shea fat, coconut fat and palm fat. Preferably solid fat is added as powder or flakes. Preferably the solid fat particles in the meat analogue have a size from 0.2 to 10 mm, preferably 0.5 to 9 mm, more preferably from 2 to 8 mm. The term size in this context refers to the longest dimension of a solid fat particle measured from one end through the centre to the other end of the particle.

Preferably, meat analogue according to the invention comprises 1 to 25 wt% of lipid comprising at least sunflower oil droplets and coconut fat particles.

If the lipid comprises both liquid oil droplets and solid fat particles, the liquid oil and solid fat are mixed as individual ingredients with the other ingredients of the meat analogue. If the solid fat is first melted and then mixed with liquid oil this will result in a new triglyceride composition which is either liquid or solid but not both. Preferably, the meat analogue according to the invention comprises 1 to 25 wt% of lipid comprising at least sunflower oil droplets. Preferably, the meat analogue according to the invention comprises less than 5 wt% of saturated fatty acid (SAFA), more preferably less than 2 wt% of SAFA, preferably 0 to 5 wt%, preferably 0 to 3 wt% of SAFA all wt% by weight of the meat analogue.

### Colouring agent

Preferably the meat analogue according to the invention comprises colouring agent. Any colouring agent suitable for food may be used such e.g., beet root extract, pomegranate fruit extract, cherry extract, carrot extract, red cabbage extract, red seaweed extract), modified natural extracts, natural juices (e.g., beet root juice, pomegranate fruit juice, cherry juice, carrot juice, red cabbage juice, red seaweed juice), modified natural juices. The amount of colouring agent will depend on the desired colour and may be between 0.1 to 5 wt% by weight of the meat analogue.

### Dietary fiber

Dietary fiber refers to indigestible carbohydrates and includes both plant fiber as defined above and fiber which has not been isolated from plants as such. Preferably, meat analogue according to the invention comprises 1 to 15 wt% of dietary fiber, more preferably 2 to 12 wt%, even more preferably 3 to 10 wt% by weight of the total meat analogue,

### A process to prepare a meat analogue according to the invention

The invention provides a process to prepare a meat analogue according to the invention, whereby the K+/Na+ ratio is obtained by admixing to the remaining ingredients an amount of protein concentrate and/or protein isolate which contribute at least 20 mg of K+, more preferably at least 40 mg of K+, most preferably at least 60 mg of K+ per 100g of meat analogue.

The invention provides a process to prepare a meat analogue according to the invention, whereby the K+/Na+ ratio is obtained by admixing to the remaining ingredients an amount of protein concentrate and/or protein isolate which contribute at least 20 mg of K+, more preferably at least 40 mg of K+, most preferably at least 60 mg of K+ per 100g of meat analogue, preferably whereby the meat analogue comprises soy protein, pea protein and combinations thereof, lipid, flavouring agents, dietary fiber, water and a ratio of K+ to Na+ of at least 2 preferably at least 2.2, more preferably at least 2.4. and at least 0.1 wt% preferably at most 5 wt% of food grade acid, by weight of the meat analogue
a. wherein the food grade acid comprises citric acid, acetic acid and at least 3 other food grade acids selected from formic acid, lactic acid, malic acid, succinic acid and combinations thereof
b. wherein the Na+ is present in amount of at most 260 mg and, more preferably at most 190mg, most preferably from 100 mg to 190 Na+ per 100g of meat analogue
c. 0.001 to 0.3 wt%, preferably 0.005 to 0.2 wt% of glutamate
d. 0.0005 to 2 wt%, preferably 0.001 to 0.5 wt% of IMP
e. 0.0005 to 2 wt%, preferably 0.001 to 0.5 wt% of GMP
f. 0.05 to 2 wt% of sugar, preferably selected from sucrose, fructose, glucose, maltose and combinations thereof.

Whereby the pH is from 5.1 to 5.9, and preferably whereby at least part of said glutamate, IMP and GMP is added as a high ribonucleotide flavouring agent, preferably said high ribonucleotide flavouring agent having at least 10 mg/g dry weight of IMP and or at least 10 mg/g dry weight of IMP expressed per g dry weight of flavouring agent;
Preferably whereby the meat analogue is substantially free of ingredients derived from animals.

### Method to decrease the off-flavour of a meat analogue

The invention provides a method to decrease the off-flavour of a meat analogue comprising the step of providing a meat analogue comprising non-animal protein, flavouring agent, lipid, dietary fiber, water whereby said meat analogue has a ratio (w/w) of K+ to Na+ of at least 1.3, more preferably at least 1.8, more preferably at least 2 preferably at least 2.2, more preferably at least 2.4. and preferably whereby food grade acid is present in an amount of at least 0.03 wt%, even more preferably at least 0.05 wt% by weight of the meat analogue, preferably said food grade acid is present in an amount of from 0.03 to 8 wt%, more preferably from 0.05 to 5 wt%, even more preferably from 0.05 to 4 wt% of food grade acids by weight of the meat analogue, preferably said food grade acid comprises citric acid, preferably the meat analogue comprises glutamate, IMP and GMP and at least part of said glutamate, IMP and GMP is added as a high ribonucleotide flavouring agent, preferably said high ribonucleotide flavouring agent having at least 10 mg/g dry weight of IMP and or at least 10 mg/g dry weight of IMP expressed per g dry weight of flavouring agent.

Preferably, the method to decrease the off-flavour of a meat analogue comprises the step of obtaining the K+/Na+ ratio by admixing to the remaining ingredients an amount of protein concentrate and/or protein isolate which contribute at least 20 mg of K+, more preferably at least 40 mg of K+, most preferably at least 60 mg of K+ per 100g of meat analogue.

The invention provides a method to decrease the off-flavour of a meat analogue comprising the step of providing a meat analogue comprising soy protein, pea protein and combinations thereof, lipid, flavouring agents, dietary fiber, water and a ratio of K+ to Na+ of at least 2 preferably at least 2.2, more preferably at least 2.4. and at least 0.1 wt% preferably at most 5 wt% of food grade acid, by weight of the meat analogue
a. wherein the food grade acid comprises citric acid, acetic acid and at least 3 other food grade acids selected from formic acid, lactic acid, malic acid, succinic acid and combinations thereof
b. wherein the Na+ is present in amount of at most 260 mg and, more preferably at most 190mg, most preferably from 100 mg to 190 Na+ per 100g of meat analogue
c. 0.001 to 0.3 wt%, preferably 0.005 to 0.2 wt% of glutamate
d. 0.0005 to 2 wt%, preferably 0.001 to 0.5 wt% of IMP
e. 0.0005 to 2 wt%, preferably 0.001 to 0.5 wt% of GMP
f. 0.05 to 2 wt% of sugar, preferably selected from sucrose, fructose, glucose, maltose and combinations thereof.

Whereby the pH is from 5.1 to 5.9 and preferably said method comprises the step of adding at least part of said glutamate, IMP and GMP as a high ribonucleotide flavouring agent, preferably said high ribonucleotide flavouring agent having at least 10 mg/g dry weight of IMP and or at least 10 mg/g dry weight of IMP expressed per g dry weight of flavouring agent, and
preferably the method comprises the step of obtaining the K+/Na+ ratio by admixing to the remaining ingredients an amount of protein concentrate and/or protein isolate which contribute at least 20 mg of K+, more preferably at least 40 mg of K+, most preferably at least 60 mg of K+ per 100g of meat analogue;
Preferably whereby the meat analogue is substantially free of ingredients derived from animals.

The invention provides the use of
- a ratio (w/w) of K+ to Na+ of at least 1.3, more preferably at least 1.8, more preferably at least 2 preferably at least 2.2, more preferably at least 2.4, and preferably
- whereby food grade acid is present in an amount of at least 0.03 wt%, even more preferably at least 0.05 wt% by weight of the meat analogue, preferably said food grade acid is present in an amount of from 0.03 to 8 wt%, more preferably from 0.05 to 5 wt%, even more preferably from 0.05 to 4 wt% of food grade acids by weight of the meat analogue, preferably said food grade acid comprises citric acid; and preferably
- glutamate, IMP and GMP whereby preferably at least part of said glutamate, IMP and GMP is added as a high ribonucleotide flavouring agent, preferably said high ribonucleotide flavouring agent having at least 10 mg/g dry weight of IMP and or at least 10 mg/g dry weight of IMP expressed per g dry weight of flavouring agent.;
comprising non-animal protein, lipid, flavouring agents, dietary fiber and water

The invention in a meat analogue to improve the meat flavour thereof, said meat analogue further provides the use of
i. a ratio of K+ to Na+ of at least 2 preferably at least 2.2, more preferably at least 2.4. and
ii. at least 0.1 wt% preferably at most 5 wt% of food grade acid,
   a. wherein the food grade acid comprises citric acid, acetic acid and at least 3 other food grade acids selected from formic acid, lactic acid, malic acid, succinic acid and combinations thereof
   b. wherein the Na+ is present in amount of at most 260 mg and, more preferably at most 190mg, most preferably from 100 mg to 190 Na+ per 100g of meat analogue
   c. 0.001 to 0.3 wt%, preferably 0.005 to 0.2 wt% of glutamate
   d. 0.0005 to 2 wt%, preferably 0.001 to 0.5 wt% of IMP
   e. 0.0005 to 2 wt%, preferably 0.001 to 0.5 wt% of GMP
   f. 0.05 to 2 wt% of sugar, preferably selected from sucrose, fructose, glucose, maltose and combinations thereof.
iii. Whereby the pH is from 5.1 to 5.9
in a meat analogue to improve the meat flavour thereof, said meat analogue further comprising non-animal protein, lipid, flavouring agents, dietary fiber and water whereby the wt% are by weight of the meat analogue.

These and other aspects, features and advantages will become apparent to those of ordinary skill in the art from a reading of the following detailed description and the appended claims. For the avoidance of doubt, any feature of one aspect of the present invention may be utilised in any other aspect of the invention. It is noted that the examples given in the description below are intended to clarify the invention and are not intended to limit the invention to those examples per se. Ratio's are weight/weight, unless indicated otherwise. Similarly, all percentages are weight/weight percentages by weight of the meat analogue without any casing, unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated. If a range is described as from 0% to y%, said ingredient may be absent.

Throughout this specification and the claims which follow, unless the context requires otherwise, the word "comprise", and variations such as "comprises" or "comprising", will be understood to imply the inclusion of a stated integer or step or group of integers or steps but not the exclusion of any other integer or step or group of integers or steps. The term "substantially free of ingredient x" is understood to mean that ingredient x is not present in an amount to have an effect although it can be present in trace amounts as part of other ingredients. The reference in this specification to any prior publication (or information derived from it), or to any matter which is known, is not, and should not be taken as an acknowledgement or admission or any form of suggestion that that prior publication (or information derived from it) or known matter forms part of the common general knowledge in the field of endeavour to which this specification relates. While the invention has been described with reference to exemplary embodiments, it is intended that the invention is not limited to the particular embodiments disclosed, but that the invention will include all embodiments falling within the scope of the appended claims. For the purpose of determining the extent of protection, due account shall be taken of any element which is equivalent to an element specified in the claims.

The invention is further illustrated by the following non-limiting examples. It will be clear to the skilled person how to carry out the invention by using equivalent means without departing from the invention.

### Examples

### Example 1

The vegan meat analogue burgers in the table below were prepared as follows (wt% by weight of the total meat analogue):
1) 15 wt% TVP was mixed with 45 wt% tap water (Wageningen, NL) and left to fully hydrate at 4°C for 30 minutes
2) All remaining dry ingredients - including fat powder if used - were admixed to the hydrated TVP and mixed in a Kenwood mixer using the K-beater at speed 1 for about half a minute.
3) the remaining water was admixed speed 1 for 30 seconds
4) if oil is used, this lipid is admixed at speed 1 for 2 minutes to form the meat analogue dough
5) the formed meat analogue dough was shaped into hamburger patties of 90 grams each having a diameter 10 cm of and a thickness of about 1.2 cm.

The hamburgers were chilled overnight at 4°C and prepared for tasting the following day. Alternatively, if the tasting could only be planned for a few days later e.g., after the weekend, the hamburgers were frozen until needed.

### Food grade acids determination

The amount of food grade acids was determined using quantitative NMR (Quantitative NMR studies of multiple compound mixtures, X Li, K Hu - Annual reports on NMR spectroscopy 90, 2017, 85-143), with a Bruker AVANCE III spectrometer operating at 600 MHz. The sample was dissolved in deuterium oxide in a glass vial and stirred to aid dissolution. Subsequently an internal NMR standard, phosphate buffer (pD 7.4) and EDTA-d12 were added. This solution was homogenized by vigorous mixing and subsequently centrifuged. The supernatant was transferred to an NMR tube for analysis. NMR spectra were recorded under NMR conditions that allow for accurate quantification. Compounds are quantified by means of commercially available quantification software (Chenomx) with an established relative method precision of 10%. By nature of the qNMR method, organic acids are determined in their ionic (base) form, but concentrations are reported in acid form.

### Meat analogue composition

Meat analogues were prepared having the following composition:
15% TVP (Solbar), 45 wt% hydration water, 2 wt% of methylcellulose, 0.5 wt% of potato protein Solanic 200 (Huijbregts Groep NL), 5% soy protein isolate (ADM, USA), 5 wt% of palm fat powder, 0.18 wt% of glucose, glutamate, IMP and GMP, 22 wt% of water and 5 wt% of sunflower oil and depending on the sample, NaCl, KCI, food grade acid (citric acid) as indicated below. The total amount of plant protein was 15.3 wt%.

### Tasting

Before the tasting, the meat analogue burgers were heated for 10 min in an oven at 180°C and 30% humidity. Alternatively, the meat analogue burgers were pan fried in 2-3 g sunflower oil per burger for 3 min on each side on medium heat such that the core temperature reached 80°C for at least 2 min. The meat analogue burgers were judged in a blind test by 5-7 panellists on beany and cardboard off-flavour.

**Table 1**

| | Comp A | 1.1 | 1.2 |
|---|---|---|---|
| Na+ (mg/100g) | 186 | 188 | 188 |
| K+ (mg/100g) | 86 | 296 | 296 |
| K+/Na+ (wt/wt) | 0.47 | 1.6 | 1.6 |
| Citric acid (wt%) | 0 | 0.15 | 0.15 |
| Glu | 0 | 0 | 0.15 |
| IMP | 0 | 0 | 0.15 |
| GMP | 0 | 0 | 0.15 |
| Decrease in off flavour vs Comparative A | NA | ++ | +++ |

The results show that the off-flavour in the meat analogues according to the invention samples 1.1 and 1.2 was decreased compared to the comparative example A.

Note: the amounts of Na+ and K+ presented in the examples are the final amounts in the meat analogue (expressed as mg/100g meat analogue) and can be added as NaCl, KCl or part of the other ingredients in the meat analogue such specific types of protein concentrate, protein isolate, flavouring agents having increased amounts of Na+ and/or K+.

### Example 2

Meat analogues were prepared as in Example 1 having the following composition
15% TVP (Solbar), 45 wt% hydration water, 2 wt% of methylcellulose, 0.5 wt% of potato protein Solanic 200 (Huijbregts Groep NL), 5% soy protein isolate (ADM, USA), 5 wt% of palm fat powder, 0.18 wt% of glucose, 0.05 wt% glutamate, 0.03 wt% of a combination of IMP and GMP (w/w 1:1), 22 wt% of water and 5 wt% of sunflower oil and depending on the sample, NaCl, KCI, food grade acid (citric acid) as indicated below. The total amount of plant protein was 15.3 wt%.

**Table 2**

| | Comp B | 2.1 | 2.2 | 2.3 |
|---|---|---|---|---|
| Na+ (mg/100g) | 178 | 174 | 179 | 179 |
| K+ (mg/100g) | 86 | 280 | 401 | 1082 |
| K+/Na+ (wt/wt) | 0.5 | 1.6 | 2.3 | 5.9 |
| Lactic acid (wt%) | 0.009 | 0 | 0 | 0 |
| Citric acid (wt%) | 0 | 0.11 | 0.15 | 0.15 |
| Decrease in off flavour vs Comparative B | NA | + | ++ | +++ |

The results show that the off-flavour in the meat analogues according to the invention samples 2.1, 2.2 and 2.3 was decreased compared to the comparative example B.

### Example 3: Chicken meat analogue

A chicken meat analogue was prepared comprising 88% of extruded vegetable soy protein, 3.2 wt% of sunflower oil, flavouring agents (incl chicken), salt, vit B12. The chicken meat analogue contained 3.2 wt% of food grade acids (a combination of 0.5 wt% citric acid, 0.41 wt% acetic acid, 0.006 wt% formic acid, 2.3 wt% lactic acid, 0.012 wt% malic acid, 0.008 wt% succinic acid), Na+, K+, glutamate, sugar, IMP, GMP as detailed below (wt% by weight of the total meat analogue composition). At least part of the food grade acids, Na+, K+, glutamate, sugar, IMP and GMP was added as part of other ingredients such as chicken flavouring agent, potassium acetate. 100g of chicken meat analogue contained 6.2g of dietary fiber and 21.1g of soy protein, 3.7mg iron and 0.6microgram of vitamin B12. The pH was 6.5.

| | Example 3 |
|---|---|
| Na+ (mg/100g) | 444 |
| K+ (mg/100g) | 1320 |
| K+/Na+ (wt/wt) | 3 |
| Citric acid (wt%) | 0.5 |
| Glutamate (wt%) | 0.047 |
| IMP (wt%) | 0.017 |
| GMP (wt%) | 0.011 |
| Sugars (of which 0.25 wt% sucrose) | 0.28 |

These chicken meat analogues scored excellent on the absence of beany/cardboard off-flavour. Surprisingly, despite the high K+/Na+ ratio the overall flavour scored excellent without undesirable metallic off-flavour

### Example 4 Burger analogue

The following composition was prepared as in example 1 comprising 15% Soy TVP (ADM, USA), 45 wt% hydration water, 4 wt% chicken egg powder, 5% soy protein isolate (ADM, USA), 5 wt% of palm fat powder, and 5 wt% of sunflower oil, 2% potato starch, 0.33% sucrose, balance is water and depending on the sample, NaCl, KCI, food grade acid (citric acid). Glutamate, IMP, GMP were added as yeast extract (Biospringer, standard yeast extract 18% salt and Biospringer 12% Nucleotide Yeast extract 18% salt). The total amount of legume protein was 15.3 wt%.

In a vegan version the 4% chicken egg powder may be replaced by 2% methylcellulose, 0.5 wt% of potato protein and 1.5% water.

| | Example 4.1 | Example 4.2 |
|---|---|---|
| | | |
| Na+ (mg/100g) | 145 | 303 |
| K+ (mg/100g) | 1003 | 741 |
| K+/Na+ (wt/wt) | 6.9 | 2.4 |
| Citric acid (wt%) | 0.1 | 0.1 |
| Glutamate (wt%) | 0.018 | 0.018 |
| IMP (wt%) | 0.007 | 0.007 |
| GMP (wt%) | 0.006 | 0.006 |

The burger analogue performed excellent on the absence of beany and cardboard off-flavour. Surprisingly, despite the high K+/Na+ ratio the overall flavour scored excellent without undesirable metallic off-flavour.

### Example 5

Vegan meat analogues according to the table below were prepared and performed excellent on the absence of beany and cardboard off-flavour which contributes to an improved meaty flavour. K+/Na+ ratio was obtained using specifically selected ingredients high in K+ and/or Na+ including soy protein concentrate having more than 2000mg K+/100g dry weight of soy protein concentrate, flavouring with more than 70 mg K+/g flavouring agent, soy protein isolate having at most 1500mg Na+/100g dry weight of soy protein isolate. The vegan burger was prepared similar to example 1 and comprised of 48% hydrated TVP (soy, wheat), soy protein isolate, wheat gluten, soy flour, starch, sunflower oil, potato protein, palm oil stearin, methylcellulose, flavour, food grade acid, colouring agents, spices, flavouring agents, citrus fiber and minor ingredients such as iron and vitamin B12. Per 100g of product, the vegan burger contained 14g of plant protein, 5g of dietary fiber, 0.4g of sugars, 13g of lipid. The pH was 5.5. The vegan shawarma strips comprised of 87 wt% hydrated soy TVP based on soy protein concentrate, 2% sunflower oil, natural flavouring agents, 1.8% shawarma powder spice mix, vinegar, potassium lactate, salt. The vegan shawarma contained 2.9 wt% food grade acid (a combination of 0.6% citric acid, 0.35% acetic acid, 0.04% formic acid, 1.9% lactic acid, 0.03% malic acid, 0.006% succinic acid). Per 100g of product, the vegan shawarma contained 20g of soy protein, 6.6g of dietary fiber, 0.4g of sugars, 2.5g of lipid. The vegan meatball comprised of 50% of hydration water, 12.4% TVP based on soy protein concentrate, 2.5% soy protein isolate, 11% rape seed oil, potato starch, vitamins, 0.6% plant fiber, wheat gluten, 2.5% methyl cellulose, flavouring agents, food grade acids (incl vinegar and citric acid), colouring agent and spices. The vegan meat ball contained 2.5 wt% food grade acid (a combination of 0.2% citric acid, 0.5% acetic acid, 0.005% formic acid, 1.8% lactic acid, 0.03% malic acid, 0.05% succinic acid) and 14% of legume protein. The pH was 5.87.

| | Vegan burger | Vegan shawarma | Vegan meat ball |
|---|---|---|---|
| Na+ (mg/100g) | 328 | 463 | 578 |
| K+ (mg/100g) | 444 | 1340 | 965 |
| K+/Na+ (wt/wt) | 1.35 | 2.89 | 1.7 |
| Citric acid (wt%) | 0.19 | 0.6 | 0.2 |
| Glutamate (wt%) | 0.09 | 0.13 | 0.059 |
| IMP (wt%) | 0.005 | 0.005 | 0.004 |
| GMP (wt%) | 0.004 | 0.006 | 0.004 |
| Total Sugars (wt%) | 0.27 | 0.197 | 1.071 |
| Of which sucrose (wt%) | 0.18 | 0.184 | 0.266 |

## Claims

1. A meat analogue comprising non-animal protein, flavouring agent, lipid, dietary fiber, water, whereby said meat analogue has a ratio (w/w) of K+ to Na+ of at least 1.3, more preferably at least 1.8, more preferably at least 2 preferably at least 2.2, more preferably at least 2.4. and whereby food grade acid is present in an amount of at least 0.03 wt%, even more preferably at least 0.05 wt% by weight of the meat analogue, preferably said food grade acid is present in an amount of from 0.03 to 8 wt%, more preferably from 0.05 to 5 wt%, even more preferably from 0.05 to 4 wt% of food grade acids by weight of the meat analogue; and whereby the food grade acid comprises citric acid preferably in an amount of at least 0.01 wt%, preferably at least 0.03 wt%, more preferably at least 0.05 wt% by weight of the meat analogue.

2. A meat analogue according to claim 1 wherein the food grade acid comprises the combination of citric acid, and at least 4 other food grade acids selected from acetic acid, formic acid, lactic acid, malic acid, and succinic acid.

3. A meat analogue according to any one of the preceding claims wherein the food grade acid comprises the combination of citric acid, acetic acid and at least 3 other food grade acids selected from formic acid, lactic acid, malic acid, succinic acid.

4. A meat analogue according to any one of the preceding claims wherein the meat analogue is substantially free of protein of animal origin.

5. A meat analogue according to any one of the preceding claims whereby the food grade acid comprises at least 0.01 wt%, preferably at least 0.03 wt%, even more preferably at least 0.05 wt%, preferably of from 0.01 to 3 wt%, more preferably 0.03 to 2 wt% of citric acid by weight of the meat analogue.

6. A meat analogue according to any one of the preceding claims whereby the pH is from 4.7 to 6.6, more preferably from 5.1 to 5.9, even more preferably 5.2 to 5.6.

7. A meat analogue according to any one of the preceding claims wherein the Na+ is present in amount of at most 600 mg, preferably at most 470 mg, more preferably at most 330 mg, even more preferably at most 260 mg, even more preferably at most 190 mg, preferably at least 10 mg, more preferably at least 50 mg, even more preferably at least 100 mg Na+ per 100g of meat analogue, even more preferably of from 50 to 260 mg, even more preferably of from 50 to 190, most preferably of from 100 to 190 mg/100g of meat analogue.

8. A meat analogue according to any one of the preceding claims further comprising
a. 0.0005 to 0.4 wt%, preferably 0.001 to 0.3 wt%, more preferably 0.005 to 0.2 wt% of glutamate by weight of the meat analogue;
b. 0.0001 to 5 wt%, preferably 0.0005 to 2 wt%, more preferably 0.001 to 0.5 wt% of guanosine monophosphate (GMP) by weight of the meat analogue and preferably
c. 0.0001 to 5 wt%, preferably 0.0005 to 2 wt%, more preferably 0.001 to 0.5 wt% of inosine monophosphate (IMP) by weight of the meat analogue.

9. A meat analogue according to the preceding claim whereby at least part of said glutamate, IMP and GMP is added as a high ribonucleotide flavouring agent, preferably said high ribonucleotide flavouring agent having at least 10 mg/g dry weight of IMP and or at least 10 mg/g dry weight of GMP expressed per g dry weight of flavouring agent.

10. A meat analogue according to any one of the preceding claims comprising less than 0.01 wt%, more preferably less than 0.001 wt%, even more preferably less than 0.0001 wt% of heme-containing protein.

11. A meat analogue according to claim 1 comprising soy protein, pea protein and combinations thereof, lipid, flavouring agents, dietary fiber, water and a ratio of K+ to Na+ of at least 2 preferably at least 2.2, more preferably at least 2.4. and at least 0.1 wt%, preferably at most 5 wt% food grade acid by weight of the meat analogue
a. wherein the food grade acid comprises citric acid, acetic acid and at least 3 other food grade acids selected from formic acid, lactic acid, malic acid, succinic acid and combinations thereof
b. wherein the Na+ is present in amount of at most 260 mg and, more preferably at most 190mg, most preferably from 100 mg to 190 Na+ per 100g of meat analogue
c. 0.001 to 0.3 wt%, preferably 0.005 to 0.2 wt% of glutamate
d. 0.0005 to 2 wt%, preferably 0.001 to 0.5 wt% of IMP
e. 0.0005 to 2 wt%, preferably 0.001 to 0.5 wt% of GMP
f. 0.05 to 2 wt% of sugar, preferably selected from sucrose, fructose, glucose, maltose and combinations thereof.
Whereby the pH is from 5.1 to 5.9 and said soy and/or pea protein comprises a protein concentrate and/or protein isolate which contributes at least 20 mg of K+, more preferably at least 40 mg of K+, most preferably at least 60 mg of K+ per 100g of meat analogue.
Whereby the meat analogue is substantially free of ingredients derived from animals.

12. A process to prepare a meat analogue according to any one of the preceding claims, whereby the K+/Na+ ratio is obtained by admixing to the remaining ingredients an amount of protein concentrate and/or protein isolate which contribute at least 20 mg of K+, more preferably at least 40 mg of K+, most preferably at least 60 mg of K+ per 100g of meat analogue.

13. A method to decrease the off-flavour of a meat analogue comprising the step of providing a meat analogue according to any one of the preceding claims 1 to 11.

14. A method according to the preceding claim comprising the step of obtaining the K+/Na+ ratio by admixing to the remaining ingredients an amount of protein concentrate and/or protein isolate which contribute at least 20 mg of K+, more preferably at least 40 mg of K+, most preferably at least 60 mg of K+ per 100g of meat analogue.

15. A method according to the preceding claim whereby the meat analogue comprises glutamate, IMP and GMP and at least part of said glutamate, IMP and GMP is added as a high ribonucleotide flavouring agent, preferably said high ribonucleotide flavouring agent having at least 10 mg/g dry weight of IMP and or at least 10 mg/g dry weight of IMP expressed per g dry weight of flavouring agent.

## Patentansprüche

1. Fleischersatzprodukt, welches nicht-tierisches Protein, Aromastoffe, Lipide, Ballaststoffe, Wasser umfasst, worin das Fleischersatzprodukt ein Verhältnis (Gew./Gew.) von K⁺ zu Na⁺ von mindestens 1,3, vorzugsweise mindestens 1,8, noch bevorzugter mindestens 2, weiter bevorzugt mindestens 2,2, noch weiter bevorzugt mindestens 2,4 aufweist, und worin eine lebensmitteltaugliche Säure in einer Menge von mindestens 0,03 Gew.-%, noch bevorzugter mindestens 0,05 Gew.-%, bezogen auf das Gewicht des Fleischersatzprodukts vorliegt, vorzugsweise worin die lebensmitteltaugliche Säure in einer Menge von 0,03 bis 8 Gew.-%, noch bevorzugter von 0,05 bis 5 Gew.-%, noch weiter bevorzugt von 0,05 bis 4 Gew.-% bezogen auf das Gewicht des Fleischersatzprodukts vorliegt; und worin die lebensmitteltaugliche Säure vorzugsweise Zitronensäure in einer Menge von mindestens 0,01 Gew.-%, noch bevorzugter mindestens 0,03 Gew.-%, noch weiter bevorzugt mindestens 0,05 Gew.-% des Fleischersatzprodukts umfasst.

2. Fleischersatzprodukt nach Anspruch 1, worin die lebensmitteltaugliche Säure die Kombination aus Zitronensäure und mindestens 4 anderen lebensmitteltauglichen Säuren umfasst, ausgewählt unter Essigsäure, Ameisensäure, Milchsäure, Äpfelsäure und Bernsteinsäure.

3. Fleischersatzprodukt nach einem der vorstehenden Ansprüche, worin die lebensmitteltaugliche Säure die Kombination aus Zitronensäure, Essigsäure und mindestens 3 weiteren lebensmitteltauglichen Säuren umfasst, ausgewählt unter Ameisensäure, Milchsäure, Äpfelsäure und Bernsteinsäure.

4. Fleischersatzprodukt nach einem der vorstehenden Ansprüche, worin das Fleischersatzprodukt im Wesentlichen frei von Proteinen tierischen Ursprungs ist.

5. Fleischersatzprodukt nach einem der vorstehenden Ansprüche, worin die lebensmitteltaugliche Säure mindestens 0,01 Gew.-%, vorzugsweise mindestens 0,03 Gew.-%, noch vorzugsweise mindestens 0,05 Gew.-%, vorzugsweise 0,01 bis 3 Gew.-%, noch bevorzugter 0,03 bis 2 Gew.-% Zitronensäure umfasst, bezogen auf das Gewicht des Fleischersatzprodukts.

6. Fleischersatzprodukt nach einem der vorstehenden Ansprüche, worin der pH-Wert zwischen 4,7 und 6,6, vorzugsweise zwischen 5,1 und 5,9, noch bevorzugter zwischen 5,2 und 5,6 liegt.

7. Fleischersatzprodukt nach einem der vorstehenden Ansprüche, worin das Na⁺ in einer Menge von höchstens 600 mg, vorzugsweise höchstens 470 mg, noch bevorzugter höchstens 330 mg, noch weiter bevorzugt höchstens 260 mg, noch bevorzugter höchstens 190 mg, vorzugsweise mindestens 10 mg, noch bevorzugter mindestens 50 mg, noch weiter bevorzugt mindestens 100 mg Na⁺ pro 100 g Fleischersatzprodukt, sogar noch weiter bevorzugt von 50 bis 260 mg, sogar noch weiter bevorzugt von 50 bis 190 mg, am meisten bevorzugt von 100 bis 190 mg/100 g Fleischersatzprodukt umfasst.

8. Fleischersatzprodukt nach einem der vorstehenden Ansprüche, welches weiter umfasst:
a. 0,0005 bis 0,4 Gew.-%, vorzugsweise 0,001 bis 0,3 Gew.-%, noch bevorzugter 0,005 bis 0,2 Gew.-% Glutamat, bezogen auf das Gewicht des Fleischersatzprodukts;
b. 0,0001 bis 5 Gew.-%, vorzugsweise 0,0005 bis 2 Gew.-%, noch bevorzugter 0,001 bis 0,5 Gew.-% Guanosinmonophosphat (GMP), bezogen auf das Gewicht des Fleischersatzprodukts und vorzugsweise
c. 0,0001 bis 5 Gew.-%, vorzugsweise 0,0005 bis 2 Gew.-%, noch bevorzugter 0,001 bis 0,5 Gew.-% Inosinmonophosphat (IMP), bezogen auf das Gewicht des Fleischersatzprodukts.

9. Fleischersatzprodukt nach dem vorstehenden Anspruch, worin mindestens ein Teil des Glutamats, IMP und GMP als hochribonukleotidhaltiger Aromastoff hinzugefügt wird, vorzugsweise worin der hochribonukleotidhaltige Aromastoff mindestens 10 mg/g Trockengewicht IMP und/oder mindestens 10 mg/g Trockengewicht GMP, ausgedrückt pro g Trockengewicht des Aromastoffs enthält.

10. Fleischersatzprodukt nach einem der vorstehenden Ansprüche, welches weniger als 0,01 Gew.-%, vorzugsweise weniger als 0,001 Gew.-%, noch bevorzugter weniger als 0,0001 Gew.-% hämhaltiges Protein umfasst.

11. Fleischersatzprodukt nach Anspruch 1, umfassend Sojaprotein, Erbsenprotein und Kombinationen davon, Lipide, Aromastoffe, Ballaststoffe, Wasser und ein Verhältnis von K⁺ zu Na⁺ von mindestens 2, vorzugsweise mindestens 2,2, noch bevorzugter mindestens 2,4 und mindestens 0,1 Gew.-%, vorzugsweise höchstens 5 Gew.-%, lebensmitteltaugliche Säure, bezogen auf das Gewicht des Fleischersatzprodukts;
a. worin die lebensmitteltaugliche Säure Zitronensäure, Essigsäure und mindestens 3 andere lebensmitteltaugliche Säuren umfasst, ausgewählt unter Ameisensäure, Milchsäure, Äpfelsäure, Bernsteinsäure und Kombinationen davon;
b. worin das Na⁺ in einer Menge von höchstens 260 mg, vorzugsweise höchstens 190 mg, am bevorzugtesten von 100 mg bis 190 Na⁺ pro 100 g Fleischersatzprodukt vorliegt;
c. 0,001 bis 0,3 Gew.-%, vorzugsweise 0,005 bis 0,2 Gew.-% Glutamat;
d. 0,0005 bis 2 Gew.-%, vorzugsweise 0,001 bis 0,5 Gew.-% IMP;
e. 0,0005 bis 2 Gew.-%, vorzugsweise 0,001 bis 0,5 Gew.-% GMP;
f. 0,05 bis 2 Gew.-% Zucker, vorzugsweise ausgewählt unter Saccharose, Fructose, Glucose, Maltose und Kombinationen davon;
worin der pH-Wert zwischen 5,1 und 5,9 liegt und das Soja- und/oder Erbsenprotein ein Proteinkonzentrat und/oder Proteinisolat umfasst, das mindestens 20 mg K⁺, vorzugsweise mindestens 40 mg K⁺, am bevorzugtesten mindestens 60 mg K⁺ pro 100 g Fleischersatzprodukt beiträgt;
worin das Fleischersatzprodukt im Wesentlichen frei von Inhaltsstoffen ist, die von Tieren stammen.

12. Verfahren zur Herstellung eines Fleischersatzprodukts nach einem der vorstehenden Ansprüche, wobei das K⁺/Na⁺-Verhältnis durch Beimischen einer Menge an Proteinkonzentrat und/oder Proteinisolat zu den übrigen Inhaltsstoffen erhalten wird, das mindestens 20 mg K⁺, vorzugsweise mindestens 40 mg K⁺, am bevorzugtesten mindestens 60 mg K⁺ pro 100 g Fleischersatzprodukt beiträgt.

13. Verfahren zur Verringerung des Fremdgeschmacks eines Fleischersatzprodukts, welches den Schritt des Bereitstellens eines Fleischersatzprodukts gemäß einem der vorstehenden Ansprüche 1 bis 11 umfasst.

14. Verfahren nach dem vorstehenden Anspruch, welches den Schritt des Erhaltens des K⁺/Na⁺-Verhältnisses durch Beimischen einer Menge an Proteinkonzentrat und/oder Proteinisolat zu den übrigen Bestandteilen umfasst, das mindestens 20 mg K⁺, vorzugsweise mindestens 40 mg K⁺, am bevorzugtesten mindestens 60 mg K⁺ pro 100 g Fleischersatzprodukt beiträgt.

15. Verfahren nach dem vorstehenden Anspruch, worin das Fleischersatzprodukt Glutamat, IMP und GMP umfasst und wobei mindestens ein Teil des Glutamats, IMP und GMP als Aromastoff mit hohem Ribonukleotidgehalt zugesetzt wird, vorzugsweise worin der Aromastoff mit hohem Ribonukleotidgehalt mindestens 10 mg/g Trockengewicht IMP ausgedrückt pro g Trockengewicht des Aromastoffs aufweist.

## Revendications

1. - Succédané de viande comprenant une protéine non animale, un agent aromatisant, un lipide, une fibre alimentaire, de l'eau, dans lequel ledit succédané de viande a un rapport (p/p) de K+ à Na+ d'au moins 1,3, de façon davantage préférée d'au moins 1,8, de façon davantage préférée d'au moins 2, de façon davantage préférée d'au moins 2,2, de façon davantage préférée d'au moins 2,4, et dans lequel un acide de qualité alimentaire est présent dans une quantité d'au moins 0,03 % en poids, de façon encore plus préférée d'au moins 0,05 % en poids du succédané de viande, de préférence ledit acide de qualité alimentaire est présent dans une quantité de 0,03 à 8 % en poids, de façon davantage préférée de 0,05 à 5 % en poids, de façon encore plus préférée de 0,05 à 4 % en poids d'acides de qualité alimentaire en poids du succédané de viande ; et dans lequel l'acide de qualité alimentaire comprend de l'acide citrique de préférence dans une quantité d'au moins 0,01 % en poids, de préférence d'au moins 0,03 % en poids, de façon davantage préférée d'au moins 0,05 % en poids du succédané de viande.

2. - Succédané de viande selon la revendication 1, dans lequel l'acide de qualité alimentaire comprend la combinaison d'acide citrique et d'au moins 4 autres acides de qualité alimentaire choisis parmi l'acide acétique, l'acide formique, l'acide lactique, l'acide malique et l'acide succinique.

3. - Succédané de viande selon l'une quelconque des revendications précédentes, dans lequel l'acide de qualité alimentaire comprend la combinaison d'acide citrique, d'acide acétique et d'au moins 3 autres acides de qualité alimentaire choisis parmi l'acide formique, l'acide lactique, l'acide malique, l'acide succinique.

4. - Succédané de viande selon l'une quelconque des revendications précédentes, dans lequel le succédané de viande est sensiblement exempt de protéine d'origine animale.

5. - Succédané de viande selon l'une quelconque des revendications précédentes, dans lequel l'acide de qualité alimentaire comprend au moins 0,01 % en poids, de préférence au moins 0,03 % en poids, de façon encore plus préférée au moins 0,05 % en poids, de préférence de 0,01 à 3 % en poids, de façon davantage préférée de 0,03 à 2 % en poids d'acide citrique en poids du succédané de viande.

6. - Succédané de viande selon l'une quelconque des revendications précédentes, dans lequel le pH est de 4,7 à 6,6, de façon davantage préférée de 5,1 à 5,9, de façon encore plus préférée de 5,2 à 5,6.

7. - Succédané de viande selon l'une quelconque des revendications précédentes, dans lequel le Na+ est présent dans une quantité d'au plus 600 mg, de préférence d'au plus 470 mg, de façon davantage préférée d'au plus 330 mg, de façon encore plus préférée d'au plus 260 mg, de façon encore plus préférée d'au plus 190 mg, de préférence d'au moins 10 mg, de façon davantage préférée d'au moins 50 mg, de façon encore plus préférée d'au moins 100 mg de Na+ par 100g de succédané de viande, de façon encore plus préférée de 50 à 260 mg, de façon encore plus préférée de 50 à 190, de la façon que l'on préfère le plus de 100 à 190 mg/100g de succédané de viande.

8. - Succédané de viande selon l'une quelconque des revendications précédentes, comprenant en outre
a. 0,0005 à 0,4 % en poids, de préférence 0,001 à 0,3 % en poids, de façon davantage préférée 0,005 à 0,2 % en poids de glutamate en poids du succédané de viande ;
b. 0,0001 à 5 % en poids, de préférence 0,0005 à 2 % en poids, de façon davantage préférée 0,001 à 0,5 % en poids de guanosine monophosphate (GMP) en poids du succédané de viande et de préférence
c. 0,0001 à 5 % en poids, de préférence 0,0005 à 2 % en poids, de façon davantage préférée 0,001 à 0,5 % en poids d'inosine monophosphate (IMP) en poids du succédané de viande.

9. - Succédané de viande selon la revendication précédente, dans lequel au moins une partie desdits glutamate, IMP et GMP est ajoutée en tant qu'agent aromatisant à haute teneur en ribonucléotides, de préférence ledit agent aromatisant à haute teneur en ribonucléotides ayant au moins 10 mg/g de poids sec d'IMP et/ou au moins 10 mg/g de poids sec de GMP exprimés par g de poids sec d'agent aromatisant.

10. - Succédané de viande selon l'une quelconque des revendications précédentes, comprenant moins de 0,01 % en poids, de façon davantage préférée moins de 0,001 % en poids, de façon encore plus préférée moins de 0,0001 % en poids de protéine en teneur en hème.

11. - Succédané de viande selon la revendication 1, comprenant de la protéine de soja, de la protéine de pois et des combinaisons de celles-ci, un lipide, des agents aromatisants, une fibre alimentaire, de l'eau et un rapport de K+ à Na+ d'au moins 2, de préférence d'au moins 2,2, de façon davantage préférée d'au moins 2,4 et au moins 0,1 % en poids, de préférence au plus 5 % en poids d'acide de qualité alimentaire en poids du succédané de viande.
a. dans lequel l'acide de qualité alimentaire comprend l'acide citrique, l'acide acétique et au moins 3 autres acides de qualité alimentaire choisis parmi l'acide formique, l'acide lactique, l'acide malique, l'acide succinique et les combinaisons de ceux-ci ;
b. dans lequel le Na+ est présent dans une quantité d'au plus 260 mg et, de façon davantage préférée, d'au plus 190 mg, de la façon que l'on préfère le plus de 100 mg à 190 Na+ par 100 g de succédané de viande ;
c. 0,001 à 0,3 % en poids, de préférence 0,005 à 0,2 % en poids de glutamate
d. 0,0005 à 2 % en poids, de préférence 0,001 à 0,5 % en poids d'IMP
e. 0,0005 à 2 % en poids, de préférence 0,001 à 0,5 % en poids de GMP
f. 0,05 à 2 % en poids de sucre, de préférence choisi parmi le saccharose, le fructose, le glucose, le maltose et leurs combinaisons,
dans lequel le pH est de 5,1 à 5,9 et ladite protéine de soja et/ou de pois comprend un concentré de protéine et/ou un isolat de protéine qui apporte au moins 20 mg de K+, de façon davantage préférée au moins 40 mg de K+, de la façon que l'on préfère le plus au moins 60 mg de K+ par 100 g de succédané de viande,
dans lequel le succédané de viande est sensiblement exempt d'ingrédients provenant d'animaux.

12. - Procédé de préparation d'un succédané de viande selon l'une quelconque des revendications précédentes, dans lequel le rapport K+/Na+ est obtenu par incorporation par mélange aux ingrédients restants d'une quantité de concentré de protéine et/ou d'isolat de protéine qui apportent au moins 20 mg de K+, de façon davantage préférée au moins 40 mg de K+, de la façon que l'on préfère le plus au moins 60 mg de K+ par 100 g de succédané de viande.

13. - Procédé pour diminuer le goût désagréable d'un succédané de viande, comprenant l'étape consistant à fournir un succédané de viande selon l'une quelconque des revendications précédentes 1 à 11.

14. - Procédé selon la revendication précédente, comprenant l'étape consistant à obtenir le rapport K+/Na+ par incorporation par mélange aux ingrédients restants d'une quantité de concentré de protéine et/ou d'isolat de protéine qui apportent au moins 20 mg de K+, de façon davantage préférée au moins 40 mg de K+, de la façon que l'on préfère le plus au moins 60 mg de K+ par 100 g de succédané de viande.

15. - Procédé selon la revendication précédente, dans lequel le succédané de viande comprend du glutamate, de l'IMP et du GMP et au moins une partie desdits glutamate, IMP et GMP est ajoutée en tant qu'agent aromatisant à haute teneur en ribonucléotides, de préférence ledit agent aromatisant à haute teneur en ribonucléotides ayant au moins 10 mg/g de poids sec d'IMP et/ou au moins 10 mg/g de poids sec d'IMP exprimés par g de poids sec d'agent aromatisant.
